# EUROPEAN PATENT SPECIFICATION

(11) **EP 3 120 125 B1**
(45) Date of publication and mention of the grant of the patent: **25.12.2019**
(21) Application number: 14885889.7
(22) Date of filing: 20.03.2014
(51) Int. Cl.: G01L 11/02, G02B 6/032, G01D 5/353, G01B 11/16

(54) **OPTICAL FIBRE PRESSURE SENSOR COMPRISING IN-CORE CAVITY AND GRATING**
FASEROPTISCHER DRUCKSENSOR MIT KERNINTERNEM RESONATOR UND GITTER
CAPTEUR DE PRESSION À FIBRE OPTIQUE COMPRENANT UN RÉSEAU DE DIFFRACTION ET UNE CAVITÉ DANS LE COEUR

(43) Date of publication of application: 25.01.2017
(73) Proprietor: Saab AB, 581 88 Linköping (SE)
(72) Inventor: FISK, Fredrik, S-586 65 Linköping (SE); ANDERSSON, Björn-Erik, S-602 09 Norrköping (SE)
(74) Representative: Zacco Sweden AB
(86) International application number: PCT/SE2014/050333
(87) International publication number: WO 2015/142235

(56) References cited:
- WO-A1-99/32863
- US-A- 6 056 436
- US-A1- 2005 063 444
- US-A1- 2008 095 495

## Description

### Technical field

The present disclosure relates in general to an optical fiber comprising at least one Bragg grating and a method of measuring pressure or pressure change using such an optical fiber.

### Background

It is well known to measure temperature and strain using an optical fiber comprising one or more Bragg gratings. The principle is based on light with a known wavelength spectrum being sent through an optical fiber and reflected by one or more Bragg gratings. The known methods most commonly make use of the physical changes that occur in gratings upon changes in physical parameters such as temperature or strain. The physical changes of a grating give rise to changes in the reflection of light by the grating. The reflection is detected or recorded in a receiver or the like. Thus, if the Bragg grating is subjected to outer influence by temperature or strain, a shift in the Bragg wavelength is caused and the detected reflections can be correlated with the temperature or strain.

It is also known to use optical fibers comprising a Bragg grating for measuring pressure. However, the difference when measuring pressure compared to when measuring temperature and strain is that the fiber as such and the Bragg grating thereof are not significantly affected by the change of pressure of the surroundings, for example the geometrical shape of the fiber and its Bragg grating is not significantly changed. Therefore, conventional fiber Bragg gratings possess low sensitivity to external pressure and are only capable of resolving pressure variations in the order of MPa. In order to increase the sensitivity of fiber Bragg gratings to pressure, mechanical amplification schemes such as polymer coatings around the fiber circumference, pressure spacers and diaphragms, and chemical etching that reduces the cross-sectional area of the optical fiber has been tested.

Examples of solutions for measuring pressure by means of optical fibers with Bragg gratings can be found for example in WO 00/33046 A1, US 2008/085074 A1, US 7336862 B1 and US 2002/196995 A1.

In many applications the above mentioned solutions may be acceptable. However, there are still applications in which it for example is not suitable to use additional external components for increasing the sensitivity of the optical fiber. Furthermore, the proposed solutions do not always provide sufficient sensitivity to pressure. There is thus still a need to further improve the sensitivity of an optical fiber to pressure to enable it to be used in further applications. WO 98/10242 discloses various embodiments of optical fibers wherein one embodiment, capable of measuring pressure, comprises a core with a Bragg grating and a cladding comprising dual side holes that may contain air or other gases and materials. It is stated that the sensitivity of the fiber pressure sensor can be adjusted by altering the size and geometry of the side holes in the cladding. Thus, in this case, it is the cladding as such that comprises means for amplifying the pressure to thereby influence the Bragg grating.

It is also previously known to use optical fibers for measuring pressure which optical fibers do not comprise any Bragg grating, but uses only external devices which influences the reflection of light through the fiber. One such example is disclosed in WO 02/0223148 A1.

US 2005/0063444 A1 discloses an optical sensor for measuring physical and material properties. A gap of a cavity can vary in response to changes in measurable parameters.

One area where there is a particular need for measuring pressure is in aerodynamic measuring on wind tunnel models and in aircraft testing where the pressure distribution on a surface has to be determined. Today, determining the pressure distribution on such a surface is often performed by drilling a large number of small holes along the airflow path in the surface of the wind tunnel model or the surface of the aircraft. A hose connected to the pressure gauge is then connected to each hole. It is not only expensive to drill enough holes in the surface to obtain the desired test results, it also influences the measurement.

If pressure instead could be determined by an optical fiber arranged on the surface, the costs associated with the pressure test would be reduced to only a fraction of the current costs and the test results would be much more reliable. However, since the optical fibers used today for measuring pressure comprises or are connected to additional means for mechanically influencing the Bragg grating of the optical fiber, these additional means influences the airflow over the surface and as such the test results.

### Summary

The object of the present invention is to obtain an optical fiber for detecting and measuring small pressure differences with high precision without the use of additional external devices for mechanically impacting the fiber.

The object is achieved by an optical fiber in accordance with independent claim 1. Embodiments are defined by the dependent claims.

Furthermore, the object is achieved by a method of measuring a pressure or a change of pressure in accordance with claim 13.

The optical fiber according to the present invention comprises a core and preferably a cladding, covering or coating surrounding said core. The core comprises at least one Bragg grating and at least one internal closed cavity, wherein the at least one Bragg grating is associated with said cavity.

The optical fiber according to the invention is capable of detecting and measuring small pressure differences with high precision without the use of additional external devices for mechanically impacting the fiber. This is achieved by the Bragg grating being associated with an internal closed cavity in the core of the fiber. The internal cavity will allow the grating to change its physical form by means of the pressure difference between the pressure inside the cavity and the pressure surrounding the fiber when the pressure surrounding the fiber changes.

The Bragg grating may suitably form a wall or a part of a wall of said internal closed cavity. Alternatively, or in addition, the Bragg grating may at least partly be spaced from said internal closed cavity by a membrane, a diaphragm or the like.

According to yet another embodiment, the cavity has an essentially oblong form. It may also suitably be essentially rounded. Thereby, it can be ensured that there will be no pressure difference within the cavity which in turn could cause difference in the how the Bragg grating is influenced by the pressure difference between the internal closed cavity and the surroundings.

The cavity may be filled with a gas if desired. If the pressure inside the cavity is known, it may be possible to determine the effect of pressure difference between the cavity and the surroundings without having to calibrate by trial and error or empirical studies before actual use of the optical fiber.

The internal closed cavity may suitably be arranged concentrically with the central axis of the core. Thereby, it can for example be ensured that it influences the Bragg grating equally in the radial direction of the core.

According to an embodiment, the core comprises a plurality of internal closed cavities spaced apart from each other along the longitudinal length of the fiber, and wherein each of said cavities is associated with a respective Bragg grating. Thereby, the optical fiber can be used for measuring pressure at various point (the points associated with the closed internal cavities) along the longitudinal extension thereof. This can be achieved for example by detecting the time delay between the reflections of radiation effected by the Bragg gratings. Alternatively, this can be achieved in case the Bragg grating associated with one internal closed cavity is a Bragg grating capable of reflecting light at a wavelength different than a Bragg grating associated with another internal closed cavity of the core.

The core may further comprise at least one second Bragg grating which is not associated with an internal cavity of the core. Thereby, it can also be detected if the Bragg grating associated with the internal closed cavity is affected by additional parameters, such as temperature and/or stain, in addition to the pressure since it is possible to have another Bragg grating which is essentially not influenced by the pressure but only other parameters. Thereby, increased reliability of the test results when measuring pressure can be obtained. Furthermore, the optical fiber can be used for multiple tests at the same time.

According to an embodiment, the core comprises two Bragg gratings associated with the same internal closed cavity of the core. The two Bragg gratings may comprise one Bragg grating which is capable of reflecting light of a different wavelength than the other Bragg grating of said two Bragg gratings. Thereby, it is possible to obtain two separate measurements of the same pressure or pressure difference, which increases the reliability of the test results.

The covering or cladding may also comprise at least one, preferably at least three equally spaced around the core, longitudinal cavities. Such cavities of the covering or cladding may further amplify the pressure of the surroundings and therefore increase the pressure sensitivity of the optical fiber.

The present disclosure also relates to a method for measuring a pressure or change of pressure comprising providing an optical fiber as previously described, emitting radiation of a known wavelength range through said optical fiber, recording the wavelength(s) of the transmitted radiation and/or the reflected radiation through said fiber, and in response to the recorded wavelength(s) of the transmitted and/or reflected radiation determining a pressure or change of pressure on the outside of the optical fiber, i.e. the surrounding atmosphere. The method may preferably be a method of measuring pressure or a change of pressure over a surface and wherein the optical fiber is provided on, close to, or at least partially embedded in said surface.

The present disclosure further relates to a method for determining a pressure distribution on a surface subjected to a flow of a medium, such as an airflow, comprising providing at least one optical fiber as previously described on, close to or partly embedded in said surface, emitting light of a known wavelength range through said optical fiber, recording the wavelength(s) of the transmitted radiation and/or the reflected radiation through said fiber, and in response to the recorded wavelength(s) of the transmitted and/or reflected radiation determining a pressure or change of pressure on the outside of the optical fiber thereby obtaining a measurement of pressure or pressure difference on the surface subjected to a flow of a medium. Such a method may for example be a method of obtaining a pressure distribution on a surface of a wind tunnel model or an aircraft subjected to airflow.

Moreover, the present disclosure relates to the use of the optical fiber as previously described for measuring pressure or change of pressure.

### Brief description of drawings

- Fig. 1: schematically illustrates a perspective view of an optical fiber.
- Fig. 2: schematically illustrates a cross-sectional view of one embodiment of an optical fiber according to the invention.
- Fig. 3: schematically illustrates a cross-sectional view of another embodiment of an optical fiber according to the invention.
- Fig. 4: schematically illustrates a cross-sectional view of an example of an optical fiber which is not covered by the claims.

- Fig. 5: schematically illustrates a cross-sectional view of an example of an optical fiber which is not covered by the claims.

- Fig. 6: schematically illustrates a cross-sectional view of an example of an optical fiber which is not covered by the claims.

- Fig. 7: schematically illustrates a cross-sectional view of an example of an optical fiber which is not covered by the claims.
- Fig. 8: schematically illustrates a cross-sectional view of yet another embodiment of an optical fiber according to the invention.
- Fig. 9: schematically illustrates a cross-sectional view of yet another embodiment of an optical fiber according to the invention.
- Fig. 10: schematically illustrates a cross-sectional view of yet another embodiment of an optical fiber according to the invention.
- Fig. 11: schematically illustrates a cross-sectional view of yet another embodiment of an optical fiber according to the invention.
- Fig. 12: schematically illustrates a cross-sectional view of yet another embodiment of an optical fiber according to the invention.

### Detailed description

In the following, the invention will be described in more detail with reference to the accompanying drawings. The drawings shall not be considered drawn to scale as some features may be exaggerated in order to more clearly illustrate the invention. Furthermore, the invention shall not be considered limited to the embodiments discussed below and shown in the figures, but may be varied within the scope of the appended claims.

In accordance with the present invention, the optical fiber comprises a core comprising at least one Bragg grating and an internal closed cavity associated with said Bragg grating. The feature of the internal closed cavity being associated with the Bragg grating can alternatively be described as the Bragg grating being associated with the internal closed cavity. In this context, "associated with" means that the internal closed cavity is adapted to and/or capable of influencing the properties of the Bragg grating, such as the geometrical shape of the Bragg grating, by introducing a possibility of expansion of or compression of the Bragg grating, thereby causing a change in the wavelength reflected by the grating when the Bragg grating is subjected to radiation. The term "associated with" therefore encompasses, but is not limited to, the specific embodiment of the Bragg grating forming a wall or the like of the internal cavity. Thus, in accordance with the present invention, the cavity is as such arranged in direct contact with, or at least close to, said Bragg grating.

By arranging a closed cavity inside the core of the fiber, a change of the pressure exerted by the ambient atmosphere on the optical fiber will give rise to a pressure difference between the closed cavity of the core and the surrounding atmosphere outside of the optical fiber. This pressure difference will influence the Bragg grating which is associated with the internal closed cavity of the core, whereby the physical properties of the Bragg grating are influenced such that there will be a change of the wavelength reflected by the Bragg grating when radiation, such as light, is allowed to travel inside the fiber. Thus, the change in reflected wavelength of the Bragg grating can be correlated to the change of pressure of the surroundings in the same way as when measuring temperature or strain.

For sake of clarity, a core should in the present disclosure be considered to mean the component of the optical fiber through which the radiation is intended to be allowed to travel. More specifically, should be considered to mean the component of the optical fiber having the highest refractive index.

Furthermore, the term "internal closed cavity" is considered to mean that the cavity is arranged inside the core and completely enclosed by the core (including the Bragg grating) of the optical fiber. Thus, the cavity as such is not in contact with any cladding, covering or coating.

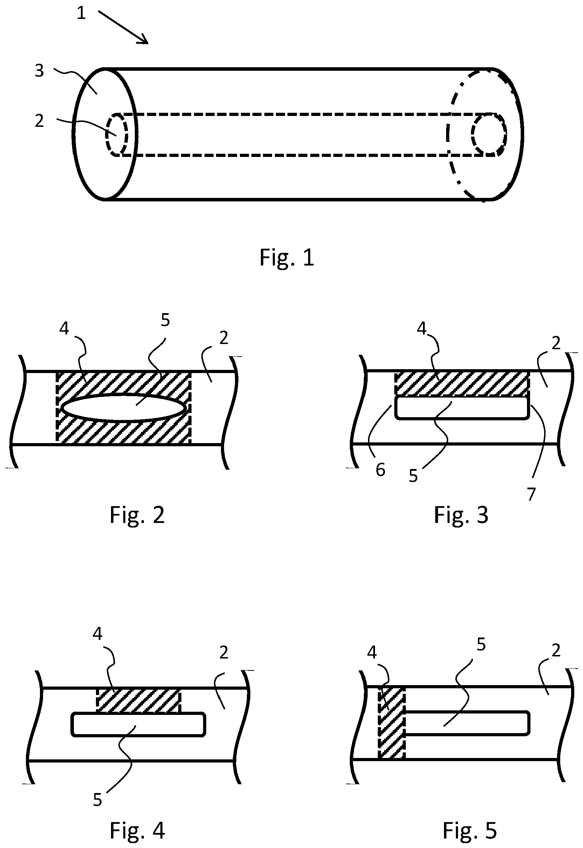

Figure 1 schematically illustrates a perspective view of an optical fiber 1 in general. The optical fiber 1 comprises a core 2 surrounded by a covering, cladding or coating 3. The covering, cladding or coating acts as a protection of the core against the surroundings and furthermore ensures that light travelling in the fiber is reflected inside the core. Thus, the covering, cladding or coating should be made of a material that has a reflective index which is lower than the reflective index of the material of the core. The optical fiber may also comprise additional layers on the outer side of the covering, cladding or coating 3 if desired, such as a protective outer layer with the purpose of protecting the covering, cladding or coating against for example moisture.

The core of the optical fiber is preferably arranged concentric with the central axis of the fiber. It is also plausible to have a plurality of cores arranged essentially parallel inside the optical fiber if desired. In such a case, a core need not necessarily be arranged concentric with the central axis of the fiber.

Figure 2 schematically illustrates a cross-sectional view of one embodiment of the optical fiber according to the present invention. In the figure, the covering, cladding or coating has been omitted. The core 2 comprises a Bragg grating 4 which completely surrounds an internal closed cavity 5 arranged in the core 2. Thus, the Bragg grating is associated with the internal closed cavity 5. When the pressure on the outside of the optical fiber, i.e. the pressure of the surroundings, changes there will arise a corresponding change of the pressure difference between the internal closed cavity 5 and the environment outside of the optical fiber. This pressure difference between the cavity and the surrounding environment will affect the Bragg grating and cause a change of wavelength reflected by the Bragg grating. The change of the reflection can be detected and recorded, and correlated to the pressure of the surrounding. Thereby, it is possible to measure the pressure exerted on the optical fiber from the surroundings. Since the closed cavity is directly associated with the Bragg grating, it is possible to obtain a very high sensitivity to external pressure, and external devices for amplifying the pressure exerted to the fiber can easily be omitted.

Figure 3 schematically illustrates a cross sectional view of an alternative embodiment of the optical fiber according to the invention. In this embodiment, the Bragg grating is in direct contact with the internal closed cavity and forms a wall of the internal closed cavity. More specifically, the Bragg grating forms an axially extending wall of the internal closed cavity. However, it does not completely surround the internal closed cavity. The Bragg grating has a longitudinal extension in the axial direction of the core which is at least as long as the longitudinal extension of the internal closed cavity. Even though Figure 3 illustrates an embodiment wherein the Bragg grating only partially extend around the circumference of the internal closed cavity, it is also plausible to arrange the Bragg grating such that it completely surrounds the internal closed cavity in the circumferential direction but that the two longitudinal end surfaces 6, 7 of the internal closed cavity, i.e. the axial end surfaces of the internal closed cavity, are essentially not in contact with the Bragg grating.

According to an example which is not covered by the claims, the Bragg grating has a longitudinal extension in the axial extension of the core which is less than the longitudinal extension of the internal closed cavity, as shown in Figure 4.

Figure 5 schematically illustrates an example not covered by the claims wherein the Bragg grating is in direct contact with and forms a wall of the internal closed cavity 5 arranged in the core 2. According to this example, the Bragg grating is not arranged along the longitudinal extension of the Bragg grating but is arranged at one of longitudinal end surfaces of the internal closed cavity.

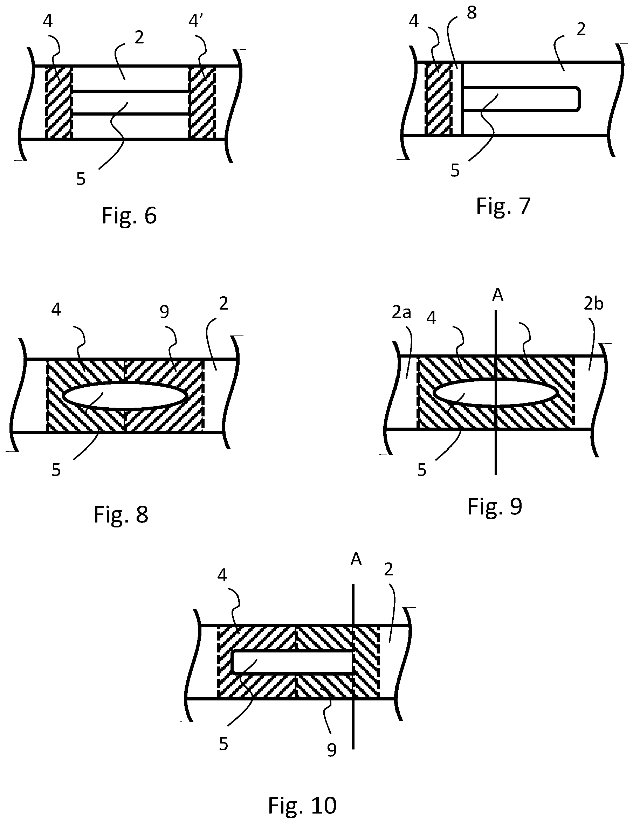

According to another example not covered by the claims, there may be a first Bragg grating 4 arranged at a first of the longitudinal end surfaces of the internal closed cavity and a second Bragg grating 4' arranged at the second longitudinal end surface of the internal closed cavity 5, as shown in Figure 6. The first and second Bragg gratings 4, 4' may in such a case constitute Bragg gratings which reflect the same wavelengths. Depending on the size of the longitudinal extension of the internal closed cavity, this may enable providing information regarding a potential pressure difference between the two longitudinal end surfaces of the internal closed cavity. Should the longitudinal extension of the internal closed cavity be small, the time difference between the reflections would be negligible. However, if it would be found that the Bragg gratings would reflect different wavelength, information that there is an error in the measurement may be achieved as they should reflect essentially the same wavelength because subjected to the same pressure difference between the internal closed cavity and the surrounding environment outside of the fiber. Alternatively, the two Bragg gratings 4, 4' may constitute Bragg gratings which reflect different wavelengths. Thereby, it is possible to obtain a better measurement security as they will give data of two measurements for the same internal closed cavity 5. Thereby, it is possible to tailor the optical fiber to the requirements needed for the intended use of the optical fiber, for example if increased measurement security is needed.

Another example not covered by the claims is shown in Figure 7. In this case, the Bragg grating is not in direct contact with the internal closed cavity but still associated therewith. This is achieved by arranging a membrane, diaphragm or the like 8 between the Bragg grating 4 and the internal closed cavity 5. Such a membrane, diaphragm or the like may serve the purpose of increasing or decreasing the physical change of the Bragg grating arising as a result of the pressure difference between the internal closed cavity of the core and the surrounding environment of the optical fiber. Even though the figure illustrates an example where the Bragg grating is arranged only at a longitudinal end surface of the internal closed cavity, it may also be arranged on both longitudinal end surfaces (as shown in Figure 6) or around a part or the hole circumference if the internal closed cavity (as shown for example in Figures 3 and 4), or such that it completely surrounds the internal closed cavity (as shown in Figure 2), as long as there is a membrane, diaphragm or the like between the internal closed cavity and the Bragg grating(s). It is however important that the membrane, diaphragm or the like 8 is selected such that it does not significantly influences the travel of radiation through the core of the optical fiber.

Figure 8 illustrates another possible embodiment of the optical fiber. In this embodiment, the internal closed cavity 5 is associated with two different Bragg gratings 4, 9, each forming a part of the wall of the internal closed cavity. The internal closed cavity 5 is thus completely enclosed by the Bragg gratings. This embodiment has the advantage of enabling two measurements for each cavity as the two Bragg gratings are subjected to the same pressure difference but may suitably be adapted to reflect different wavelengths. This embodiment thus provide an increased security of the measurement of the pressure or pressure difference.

The optical fiber may for example be provided with the internal closed cavity by burning a cavity in the optical fiber core. Alternatively, it may be produced in one or two axial end surfaces of core sections which thereafter are joined to each other by conventional methods such as to jointly forming the core of the optical fiber.

Figure 9 shows an embodiment wherein two separate core sections 2a, 2b each having a cavity in an axial end surface and being joined such that an internal closed cavity 5 is formed. The line A illustrates the interface of the core sections 2a and 2b before joining. The Bragg grating is preferably inscribed after the core sections have been assembled.

It is also possible to arrange the cavity in only one of the core sections wherein an axial end surface of the other core section, after joining, forms a part of a wall of the internal closed cavity as shown in Figure 10. Figure 10 also shows an embodiment wherein two different Bragg gratings are associated with the same internal closed cavity in the same manner as disclosed with reference to Figure 8. It is however possible to arrange the Bragg grating(s) in the same manner as disclosed in any of the Figures 2-7 also in such an embodiment wherein the fiber has been produced by assembly and joining of one core section having an open cavity arranged in an axial end surface and one core section which does not have a cavity in the axial end surface thereof.

According to one embodiment, the optical fiber may comprise a plurality of internal closed cavity arranged in the core and along the axial extension of the core. Each of the cavities may suitably be associated with a Bragg grating. The Bragg gratings of each internal closed cavity is preferably a Bragg grating which is capable of reflecting wavelengths different than a Bragg grating of another internal closed cavity. This embodiment with a plurality of internal closed cavities has the advantage that it is possible to obtain may different points of measurements along the extension of the optical fiber, thereby providing a plurality of measurements of pressure. This embodiment is especially suitable when desiring to obtain information regarding a pressure distribution over for example a surface as the optical fiber can be arranged on said surface, for example in a meandering pattern over the surface or by arranging a plurality of essentially parallel optical fibers according to the invention to provide a net of measurement points.

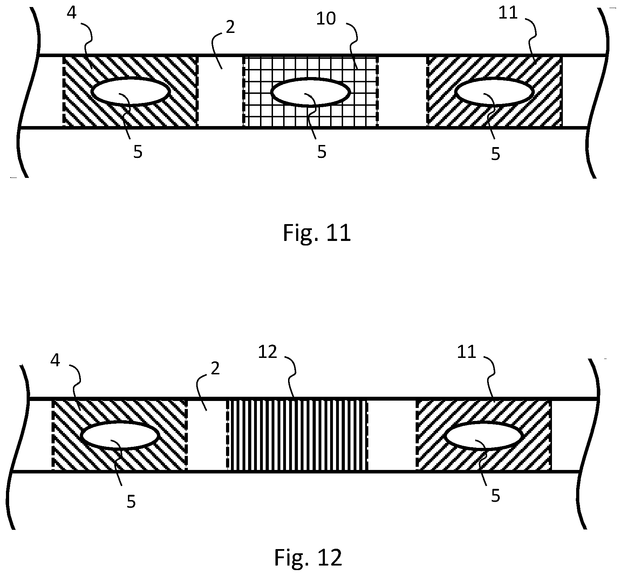

One example of an optical fiber comprising a plurality of internal closed cavities in the core 2 is shown in Figure 11. In the figure, three different internal closed cavities 5 are shown. Each of the cavities is associated with a respective Bragg grating 4, 10, 11. Even though the figure illustrate an embodiment wherein each of the Bragg gratings encloses their respective internal closed cavity, it is possible to arrange each of the Bragg gratings in any of the manner as disclosed with regard to Figures 2-10. According to a preferred embodiment, each cavity is associated with a Bragg grating 4, 10, 11 which is capable of reflecting a different wavelength than a neighboring Bragg grating. It is plausible that each of the Bragg gratings is capable of reflecting a different wavelength than the other Bragg gratings of the optical fiber. However, it is also possible to have two or more Bragg gratings capable of reflecting the same wavelength but associated with different internal closed cavities as long as they are sufficiently separated from each other that a specific reading can be determined based on the delay of response.

According to one embodiment, the optical fiber may comprise at least one Bragg grating which is associated with a cavity and a second Bragg grating which is not associated with a Bragg grating. Thereby, it is also possible to obtain data regarding the temperature or strain to which the fiber is subjected in order to determine if the Bragg grating associated with the cavity is influenced not only by the change of pressure but also by temperature or strain. Thereby, more reliable results may be obtained. Preferably, such a Bragg grating not associated with an internal closed cavity should be arranged sufficiently close to a Bragg grating which is associated with an internal closed cavity to be capable of providing a close enough estimation as to the temperature to which the Bragg grating associated with an internal closed cavity is subjected.

Figure 12 illustrates one such example of an optical fiber. The core comprises a plurality of Bragg gratings 4, 11, 12. Some of the Bragg gratings 4 and 11 are associated with internal cavities and thus adapted to give information regarding pressure or pressure difference. However, at least one of the Bragg gratings is a Bragg grating 12 not associated with an internal cavity. Thereby, the Bragg grating 12 is adapted to provide information regarding the temperature or strain to which the fiber is subjected and which may influence also the Bragg gratings associated with an internal closed cavity.

The optical fiber having a core comprising a Bragg grating associated with an internal closed cavity of the core as described in any of the embodiments disclosed above is especially suitable for measuring small pressure differences which high accuracy. It is therefore highly suitable for use of measuring pressure differences in various applications, and especially over surfaces.

One particularly suitable application is in the measuring of pressure distributions on surfaces subjected to airflow, such as surfaces of wind tunnel models or aircrafts during flight.

By arranging the optical fiber according to the invention on the surface of such a surface adapted to be subjected to an airflow, it is possible to obtain a measurement on the surface to a much lower cost than for example the conventional method comprising drilling a large number of holes in the surface of the wind tunnel model. Furthermore, since the diameter of the optical fiber is small it essentially does not influence the result of the measurement and therefore, much more reliable results are obtainable by means of the optical fiber. Furthermore, it is possible to have much more measurement points arranged on the surface as the fiber can easily comprises a very large number of internal closed cavities associated with a respective Bragg grating.

The optical fiber according to the present invention can be arranged on or at least partially embedded in the surface on which the pressure or pressure distribution should be determined in accordance with previously know techniques in the field, for example when measuring strain or temperature on a surface. For example, it may be bonded to the surface by means of an appropriate adhesive. Such techniques are readily apparent to the skilled person in the art of optical fiber sensors and will therefore not be discussed in the present disclosure.

## Claims

1. Optical fiber (1) comprising a core (2) and optionally a cladding (3), covering or coating surrounding said core, the core (2) comprising at least one Bragg grating (4) and at least one internal closed cavity (5), **characterized in that** said at least one Bragg grating (4) is associated with said cavity so that the internal cavity will allow the grating to change its physical form by means of a pressure difference between the pressure inside the cavity and the pressure surrounding the fibre when the pressure surrounding the fibre changes, wherein the Bragg grating (4) completely surrounds the cavity (5) or wherein the Bragg grating (4) has a longitudinal extension in the longitudinal direction of the core (2) at least along the entire longitudinal extension of the internal closed cavity (5).

2. Optical fiber (1) according to claim 1, wherein the Bragg grating (4) forms a wall or a part of a wall of said internal closed cavity (5).

3. Optical fiber (1) according to claim 1, wherein the Bragg grating (4) is spaced from said internal closed cavity (5) by a membrane (6), a diaphragm or the like.

4. Optical fiber (1) according to any of the preceding claims, wherein the internal closed cavity (5) has an essentially oblong form.

5. Optical fiber (1) according to any of the preceding claims, wherein the internal closed cavity (5) is filled with a gas.

6. Optical fiber (1) according to any of the preceding claims, wherein said internal closed cavity (5) is essentially concentrically arranged with the central axis of the core (2).

7. Optical fiber (1) according to any of the preceding claims, wherein the core (2) comprises a plurality of internal closed cavities (5) spaced apart from each other along the longitudinal length of the fiber, and wherein each of said cavities is associated with a respective Bragg grating.

8. Optical fiber according to claim 7, wherein the Bragg grating (4) associated with one internal closed cavity is a Bragg grating capable of reflecting light at a wavelength different than a Bragg grating associated with another internal closed cavity of the core.

9. Optical fiber according to any of the preceding claims, wherein the core further comprises at least one second Bragg grating which is not associated with an internal cavity of the core so that it is possible to obtain data regarding the temperature or strain to which the fiber is subjected in order to determine if the Bragg grating associated with the cavity is influenced not only by the change of pressure but also by temperature or strain.

10. Optical fiber according to any of the preceding claims, wherein the core comprises two Bragg gratings associated with the same internal closed cavity of the core.

11. Optical fiber according to claim 10, wherein said two Bragg gratings comprises one Bragg grating which is capable of reflecting light of a different wavelength than the other Bragg grating of said two Bragg gratings.

12. Optical fiber according to any of the preceding claims, comprising a covering having at least one longitudinal cavity, preferably at least three longitudinal cavities.

13. Method for measuring a pressure or change of pressure comprising providing an optical fiber according to any of the preceding claims, emitting radiation of a known wavelength range through said optical fiber, recording the wavelength(s) of the transmitted radiation and/or the reflected radiation through said fiber, and in response to the recorded wavelength(s) of the transmitted and/or reflected radiation determining a pressure or change of pressure on the outside of the optical fiber.

14. Method according to claim 13, wherein the method is a method of measuring a pressure or a change of pressure over a surface and wherein the optical fiber is provided on, close to, or at least partially embedded in said surface.

15. Method for determining a pressure distribution on a surface subjected to a flow of a medium, such as an airflow, comprising providing at least one optical fiber according to any of claims 1 to 12 on, close to or partly embedded in said surface, emitting light of a known wavelength range through said optical fiber, recording the wavelength(s) of the transmitted radiation and/or the reflected radiation through said fiber, and in response to the recorded wavelength(s) of the transmitted and/or reflected radiation determining a pressure or change of pressure on the outside of the optical fiber thereby obtaining a measurement of pressure or pressure difference on the surface subjected to a flow of a medium.

16. Use of the optical fiber according to any of claims 1 to 12 for measuring pressure.

## Patentansprüche

1. Optische Faser (1), umfassend einen Kern (2) und eventuell eine diesen Kern umgebende Ummantelung (3), Abdeckung oder Beschichtung, wobei der Kern (2) mindestens ein Bragg-Gitter (4) und mindestens einen inneren geschlossenen Hohlraum (5) umfasst, **dadurch gekennzeichnet, dass** das mindestens eine Bragg-Gitter (4) dem Hohlraum so zugeordnet ist, dass der innere Hohlraum es dem Gitter ermöglicht, seine physikalische Form durch eine Druckdifferenz zwischen dem Druck innerhalb des Hohlraums und dem die Faser umgebenden Druck zu verändern, wenn sich der die Faser umgebende Druck ändert, wobei das Bragg-Gitter (4) den Hohlraum (5) vollständig umgibt, oder wobei das Bragg-Gitter (4) zumindest entlang der gesamten Längserstreckung des inneren geschlossenen Hohlraums (5) eine Längserstreckung in Längsrichtung des Kerns (2) aufweist.

2. Optische Faser (1) nach Anspruch 1, wobei das Bragg-Gitter (4) eine Wand oder einen Teil einer Wand des inneren geschlossenen Hohlraums (5) bildet.

3. Optische Faser (1) nach Anspruch 1, wobei das Bragg-Gitter (4) von dem inneren geschlossenen Hohlraum (5) durch eine Membran (6), eine Rollmembran oder dergleichen beabstandet ist.

4. Optische Faser (1) nach einem der vorhergehenden Ansprüche, wobei der innere geschlossene Hohlraum (5) eine im Wesentlichen längliche Form aufweist.

5. Optische Faser (1) nach einem der vorhergehenden Ansprüche, wobei der innere geschlossene Hohlraum (5) mit einem Gas gefüllt ist.

6. Optische Faser (1) nach einem der vorhergehenden Ansprüche, wobei der innere geschlossene Hohlraum (5) im Wesentlichen konzentrisch mit der Mittelachse des Kerns (2) angeordnet ist.

7. Optische Faser (1) nach einem der vorhergehenden Ansprüche, wobei der Kern (2) eine Mehrheit innerer geschlossener Hohlräume (5) umfasst, die entlang der Faserlängserstreckung voneinander beabstandet sind, und wobei jedem der Hohlräume jeweils ein Bragg-Gitter zugeordnet ist.

8. Optische Faser nach Anspruch 7, wobei das einem inneren geschlossenen Hohlraum zugeordnete Bragg-Gitter (4) ein Bragg-Gitter ist, das Licht mit einer anderen Wellenlänge reflektieren kann, als ein einem anderen geschlossenen Hohlraum des Kerns zugeordnetes Bragg-Gitter.

9. Optische Faser nach einem der vorhergehenden Ansprüche, wobei der Kern ferner mindestens ein zweites Bragg-Gitter umfasst, das nicht einem inneren Hohlraum des Kerns zugeordnet ist, so dass es möglich ist, Daten über die Temperatur oder Belastung, der die Faser ausgesetzt wird, zu erhalten, um zu bestimmen, ob das dem Hohlraum zugeordnete Bragg-Gitter nicht nur durch die Druckänderung, sondern auch durch Temperatur oder Belastung beeinflusst wird.

10. Optische Faser nach einem der vorhergehenden Ansprüche, wobei der Kern zwei Bragg-Gitter umfasst, die dem gleichen inneren geschlossenen Hohlraum des Kerns zugeordnet sind.

11. Optische Faser nach Anspruch 10, wobei die beiden Bragg-Gitter ein Bragg-Gitter umfassen, das Licht mit einer anderen Wellenlänge reflektieren kann, als das andere Bragg-Gitter der beiden Bragg-Gitter.

12. Optische Faser nach einem der vorhergehenden Ansprüche, umfassend eine Abdeckung mit mindestens einem Längshohlraum, vorzugsweise mindestens drei Längshohlräumen.

13. Verfahren zum Messen eines Drucks oder einer Druckänderung, umfassend Bereitstellen einer optischen Faser nach einem der vorgehenden Ansprüche, Emittieren von Strahlung eines bekannten Wellenlängenbereichs durch die optische Faser, Aufzeichnen der Wellenlänge(n) der übertragenen Strahlung und/oder der reflektierten Strahlung durch die Faser und als Reaktion auf die aufgenommene(n) Wellenlänge(n) der übertragenen und/oder reflektierten Strahlung Ermitteln eines Drucks oder einer Druckänderung auf der Außenseite der optischen Faser.

14. Verfahren nach Anspruch 13, wobei das Verfahren ein Verfahren zum Messen eines Drucks oder einer Druckänderung über eine Oberfläche ist, und wobei die optische Faser auf, in der Nähe von, oder zumindest teilweise in die Oberfläche eingebettet, vorgesehen ist.

15. Verfahren zur Bestimmung einer Druckverteilung auf einer einem Strom eines Mediums, wie einem Luftstrom, unterliegenden Oberfläche, umfassend das Bereitstellen mindestens einer optischen Faser nach einem der Ansprüche 1 bis 12 auf, in der Nähe von oder teilweise eingebettet in die Oberfläche, Emittieren von Strahlung eines bekannten Wellenlängenbereichs durch die optische Faser, Aufzeichnen der Wellenlänge(n) der übertragenen Strahlung und/oder der reflektierten Strahlung durch die Faser und als Reaktion auf die aufgenommene(n) Wellenlänge(n) der übertragenen und/oder reflektierten Strahlung, Ermitteln eines Drucks oder einer Druckänderung auf der Außenseite der optischen Faser, und dadurch Erhalten einer Druck- oder Druckdifferenzmessung auf der dem Strom eines Mediums unterliegenden Oberfläche.

16. Verwendung der optischen Faser nach einem der Ansprüche 1 bis 12 zur Druckmessung.

## Revendications

1. Fibre optique (1) comprenant un noyau (2) et éventuellement une gaine (3) une couverture ou un revêtement entourant ledit noyau, le noyau (2) comprenant au moins un réseau de Bragg (4) au moins une cavité interne fermée (5), **caractérisée en ce que** ledit au moins un réseau de Bragg (4) est associé à ladite cavité si bien que la cavité interne va permettre au réseau de changer sa forme physique au moyen d'une différence de pression entre la pression à l'intérieur de la cavité et la pression entourant la fibre lorsque la pression entourant le fibre change, dans lequel le réseau de Bragg (4) entoure entièrement la cavité (5) ou dans lequel le réseau de Bragg (4) présente une extension longitudinale dans la direction longitudinale du noyau (2) au moins le long de toute l'extension longitudinale de la cavité fermée interne (5).

2. Fibre optique (1) selon la revendication 1, dans laquelle le réseau de Bragg (4) forme une paroi ou une partie d'une paroi de ladite cavité fermée interne (5).

3. Fibre optique (1) selon la revendication 1, dans laquelle le réseau de Bragg (4) est espacé de ladite cavité fermée interne (5) par une membrane (6), un diaphragme ou similaire.

4. Fibre optique (1) selon l'une quelconque des revendications précédentes, dans laquelle la cavité fermée interne (5) a une forme essentiellement oblongue.

5. Fibre optique (1) selon l'une quelconque des revendications précédentes, dans laquelle la cavité fermée interne (5) est remplie d'un gaz.

6. Fibre optique (1) selon l'une quelconque des revendications précédentes, dans laquelle ladite cavité fermée interne (5) est agencée de manière essentiellement concentrique avec l'axe central du noyau (2).

7. Fibre optique (1) selon l'une quelconque des revendications précédentes, dans laquelle le noyau (2) comprend une pluralité de cavités fermées internes (5) espacées les unes des autres le long de la longueur longitudinale de la fibre, et dans laquelle chacune desdites cavités est associée avec un réseau de Bragg respectif.

8. Fibre optique selon la revendication 7, dans laquelle le réseau de Bragg (4) associé à une cavité interne fermée est un réseau de Bragg capable de réfléchir la lumière à une longueur d'onde différente de celle d'un réseau de Bragg associé à une autre cavité interne fermée du noyau.

9. Fibre optique selon l'une quelconque des revendications précédentes, dans laquelle le noyau comprend en outre au moins un deuxième réseau de Bragg qui n'est pas associé à une cavité interne du noyau si bien qu'il est possible d'obtenir des données portant sur la température ou la contrainte à laquelle la fibre est soumise afin de déterminer si le réseau de Bragg associé avec la cavité est influencé non seulement par le changement de pression mais aussi par la température ou la contrainte.

10. Fibre optique selon l'une quelconque des revendications précédentes, dans laquelle le noyau comprend deux réseaux de Bragg associés à la même cavité interne fermée du noyau.

11. Fibre optique selon la revendication 10, dans laquelle lesdits deux réseaux de Bragg comprennent un réseau de Bragg qui est capable de réfléchir une lumière d'une longueur d'onde différente de celle de l'autre réseau de Bragg desdits deux réseaux de Bragg.

12. Fibre optique selon l'une quelconque des revendications précédentes, comprenant un revêtement ayant au moins une cavité longitudinale, de préférence au moins trois cavités longitudinales.

13. Procédé de mesure d'une pression ou d'un changement de pression comprenant la fourniture d'une fibre optique selon l'une quelconque des revendications précédentes, émettant un rayonnement d'une plage de longueurs d'onde connue à travers ladite fibre optique, enregistrant la ou les longueurs d'onde du rayonnement transmis et / ou du rayonnement réfléchi à travers ladite fibre, et en réponse à la ou aux longueurs d'onde enregistrées du rayonnement transmis et / ou réfléchi, déterminant une pression ou un changement de pression à l'extérieur de la fibre optique.

14. Procédé selon la revendication 13, dans lequel le procédé est un procédé de mesure d'une pression ou d'un changement de pression sur une surface, et dans lequel la fibre optique est prévue sur ladite surface, à sa proximité ou au moins partiellement noyée dans celle-ci.

15. Procédé de détermination d'une distribution de pression sur une surface soumise à un écoulement d'un fluide, tel qu'un écoulement d'air, comprenant la fourniture d'au moins une fibre optique selon l'une quelconque des revendications 1 à 12, à proximité de ou partiellement noyée dans ladite surface, émettant de la lumière d'une plage de longueurs d'onde connue à travers ladite fibre optique, enregistrant la ou les longueurs d'onde du rayonnement transmis et / ou du rayonnement réfléchi à travers ladite fibre, et en réponse à la ou aux longueurs d'onde enregistrées du rayonnement transmis et / ou réfléchi, déterminant une pression ou un changement de pression à l'extérieur de la fibre optique, obtenant ainsi une mesure de pression ou différence de pression sur la surface soumise à un écoulement d'un milieu.

16. Utilisation de la fibre optique selon l'une quelconque des revendications 1 à 12 pour mesurer la pression.
